# EUROPÄISCHE PATENTANMELDUNG

(11) **EP 4 776 094 A1**
(43) Veröffentlichungstag der Anmeldung: **15.07.2026**
(21) Anmeldenummer: 25151256.2
(22) Anmeldetag: 10.01.2025
(51) Int. Cl.: G05D 1/667, G05D 105/28, G05D 107/70, G05D 107/00, G05D 1/617

(54) **VERFAHREN ZUM AUTOMATISCHEN BELADEN UND/ODER ENTLADEN EINES LASTKRAFTWAGENS AN EINEM VERLADEBEREICH UND SENSORSYSTEM ZUM ABSICHERN DES AUTOMATISCHEN BELADENS UND/ODER ENTLADENS DES LASTKRAFTWAGENS**

(71) Anmelder: SICK AG, 79183 Waldkirch (DE)
(72) Erfinder: HAMMES, Markus, 79117 Freiburg (DE); SIGMUND, Jörg, 79341 Kenzingen (DE); MAYER, Nikolaus, 79110 Freiburg (DE); KADIYAM, Sandeep, 79104 Freiburg (DE)
(74) Vertreter: Manitz Finsterwald Patent- und Rechtsanwaltspartnerschaft mbB

(57) **Zusammenfassung**

Eine Ausführungsform der Erfindung betrifft ein Verfahren zum automatischen Beladen und/oder Entladen eines Lastkraftwagens, Lkws, an einem Verladebereich, wobei der Verladebereich mindestens einen Zugangspunkt aufweist, welcher mit einer optischen Zählvorrichtung versehen ist. Diese ist zum optischen Erfassen einer Anzahl von Passagen von Personen über den Zugangspunkt eingerichtet. Das Verfahren weist die folgenden Schritte auf:
Andocken des Lkws an den Verladebereich,
Aktivieren des Beladens und/oder Entladens,
Beladen und/oder Entladen von zu verladenden Gegenständen unter Verwendung von mindestens einem autonomen Fahrzeug unter fortlaufender Überwachung des mindestens einen Zugangspunkts mittels der optischen Zählvorrichtung. Dabei wird das Beladen und/oder Entladen unterbrochen, sobald die Zählvorrichtung eine Passage mindestens einer Person über den mindestens einen Zugangspunkt detektiert.

## Beschreibung

Die vorliegende Erfindung betrifft ein Verfahren zum automatischen Beladen und/oder Entladen eines Lastkraftwagens, Lkws, an einem Verladebereich und ein Sensorsystem zum Absichern dieses automatischen Beladens und/oder Entladens des Lkws.

Durch Automatisierung entstehen in Fabriken oder Industrieanlagen für Menschen sichere Bereiche, die frei von gefährlichen Maschinen oder Automaten sind, und für Personen nicht sichere Bereiche, in denen sich gefährliche Maschinen oder selbstfahrende, automatisch gesteuerte Fahrzeuge befinden, vor denen Menschen besonders geschützt werden müssen. Ein mögliches Anwendungsszenario ist das automatische Be- und Entladen von Lkws. Hierbei geht es darum, ein manuelles Be- und Entladen unter Einsatz von menschlichen Arbeitskräften, beispielsweise Staplerfahrern, zu automatisieren, um Kosten zu reduzieren und eine Abhängigkeit von der Verfügbarkeit dieser menschlichen Arbeitskräfte zu verringern.

Im Einzelnen sollen in dem anvisierten Anwendungsfall Lkws an Ladebuchten von Fabriken oder Logistikzentren mit Hilfe von autonomen Förderfahrzeugen, auch bekannt als Englisch Automated Guided Vehicles, AGVs, be- und/oder entladen werden. Beispielsweise nehmen nach dem Andocken eines Lkws derartige autonome Fahrzeuge Waren aus dem Laderaum des Lkws auf und bringen diese an einen Bestimmungsort, beispielsweise einer Lagerhalle der Fabrik, oder umgekehrt: Waren aus der Lagerhalle oder Fabrik werden in den Lkw zum Abtransport einladen. Aufgrund der beengten Verhältnisse im Laderaum des Lkws, der schlechten Einsehbarkeit und dem Fehlen von Flucht- oder Ausweichmöglichkeiten für Personen kann ein Be- und Entladen mit den derzeit bekannten Sicherheitssensoren nicht mit vertretbarem Aufwand oder nur mit erheblichen Einschränkungen für die Produktivität des automatisierten Prozesses abgesichert und somit auch nicht automatisiert werden. Das manuelle Be- und Entladen verursacht hohe Kosten und führt aufgrund möglicherweise geringer Verfügbarkeit von Arbeitskräften zu einem Engpass in einem Logistikablauf.

Bekannte Sicherheitssensoren, beispielsweise Sicherheitslaserscanner, sichern Fahrbewegungen von AGVs mit Hilfe von Schutzfeldern ab, welche den Fahrbereich in Fahrtrichtung erfassen. Wenn das Fahrzeug um enge Kurven fährt oder in eine Sackgasse einfährt, ist es erforderlich, Schutzfelder des AGVs situationsabhängig dynamisch anzupassen oder gänzlich zu deaktivieren. Damit soll verhindert werden, dass Gegenstände oder Wände die Schutzfeldfunktion fälschlicherweise auslösen und die Fahrt des AGVs stoppen. Es sind jedoch genau diese Bedingungen, welche beim automatischen Be- und Entladen eines Lkws zwangsläufig vorliegen. Eine Erweiterung der Sicherheitssensorik auf 3D-Systeme bringt hierfür keine Lösung, da auch in diesem Fall die 3D-Schutzfelder des AGVs auf die beengten Verhältnisse angepasst oder gänzlich deaktiviert werden müssten.

Bekannte Ansätze zur Realisierung eines automatisierten Be- und Entladens von Lkws basieren beispielsweise auf speziell ausgestalteten Ladebuchten, die Waren außerhalb des Lkws vorbereiten und anschließend mit Hilfe eines speziellen Ladesystems in den Lkw einfahren. Dafür ist es erforderlich, dass die Lkws spezifische Voraussetzungen erfüllen, um automatisch be- und entladen werden zu können. Der fabrikseitige Anteil dieser Lösung muss jeweils fest an einer Ladebucht installiert werden, was hohe Kosten mit sich bringt. Zudem entsteht bei diesen Speziallösungen ein zusätzlicher Übergabevorgang. Selbst mit diesen Lösungen ist es nicht möglich, autonome Flurförderzeuge unter Einhaltung der gebotenen Sicherheit direkt für ein automatisches Be- und Entladen von Lkws einzusetzen.

Eine Aufgabe besteht folglich darin, eine Lösung für ein sicheres Be- und Entladen eines Lkws mit einem autonomen Fahrzeug anzugeben.

Die Aufgabe wird gelöst durch das Verfahren sowie das Sensorsystem der unabhängigen Patentansprüche. Weiterbildungen und Ausgestaltungen der Erfindung sind jeweils Gegenstand der abhängigen Patentansprüche.

Eine Ausführungsform der Erfindung betrifft ein Verfahren zum automatischen Beladen und/oder Entladen eines Lkws an einem Verladebereich, wobei der Verladebereich mindestens einen Zugangspunkt aufweist, welcher mit einer optischen Zählvorrichtung versehen ist. Diese ist zum optischen Erfassen einer Anzahl von Passagen von Personen über den Zugangspunkt eingerichtet. Das Verfahren weist die folgenden Schritte auf:
Andocken des Lkws an den Verladebereich,
Aktivieren des Beladens und/oder Entladens,
Beladen und/oder Entladen von zu verladenden Gegenständen unter Verwendung von mindestens einem autonomen Fahrzeug unter fortlaufender Überwachung des mindestens einen Zugangspunkts mittels der optischen Zählvorrichtung. Dabei wird das Beladen und/oder Entladen unterbrochen, sobald die Zählvorrichtung eine Passage mindestens einer Person über den mindestens einen Zugangspunkt detektiert.

Mit dem vorgeschlagenen Verfahren wird ein automatisches Be- und Entladen eines Lkws unter Verwendung des mindestens einen autonomen Fahrzeugs auf für Personen sichere Art und Weise ermöglicht. Dies wird im Wesentlichen durch den Einsatz der optischen Zählvorrichtung an dem Zugangspunkt des Verladebereichs, an welchem der Lkw andockt, erreicht. Mit Hilfe der optischen Zählvorrichtung wird der mindestens eine Zugangspunkt, über welchen beispielsweise Personen den Verladebereich betreten können, fortlaufend überwacht. Sobald die Zählvorrichtung die Passage mindestens einer Person über den Zugangspunkt, also den Zutritt einer Person zu dem Verladebereich, detektiert, wird das automatische Beladen und/oder Entladen unterbrochen. Das autonome Fahrzeug kann dabei auch als AGV wie oben definiert bezeichnet werden.

Das vorgeschlagene Verfahren benötigt kein speziell dafür ausgelegtes Verladesystem, wie dies im Stand der Technik beschrieben ist. Über eine sichere Zählung der Zutritte bzw. Austritte, also Passagen, von Personen über den Zugangspunkt zum Verladebereich unter Verwendung der optischen Zählvorrichtung wird Kenntnis über die Anwesenheit von Personen im Verladebereich erlangt. Das automatische Be- und Entladen des Lkws wird so lange fortgesetzt, bis die optische Zählvorrichtung den Zugang einer Person zum Verladebereich detektiert. Das Verfahren lässt sich kostengünstig realisieren und ist weitestgehend unabhängig von der Verfügbarkeit von Arbeitskräften, die einen Gabelstapler fahren.

Der Verladebereich ist ein baulich oder auf andere Art und Weise abgegrenzter Bereich innerhalb einer Fabrik oder Industrieanlage, an welchen der Lkw von außerhalb andocken kann. Dies erfolgt beispielsweise durch präzises Rückwärtsfahren des Lkws an eine Verladerampe oder ein Andocktor, so dass der Lkw im rechten Winkel zur Rampe positioniert ist und eine Ladebrücke sicher auf einer Ladefläche des Lkws aufliegt. Innerhalb des Verladebereichs erledigt mindestens ein autonomes Fahrzeug das Beladen oder Entladen des Lkws. Dabei überfährt, also passiert, das AGV unter Umständen den Zugangspunkt. Personen haben zu dem Verladebereich nur über den Zugangspunkt Zutritt.

In einer Weiterbildung umfasst das Unterbrechen des Beladens und/oder Entladens des Lkws ein Unterbinden einer autonomen Bewegung des mindestens einen autonomen Fahrzeugs in dem Verladebereich durch Aussenden mindestens eines Steuersignals an das mindestens eine Fahrzeug.

Sobald die optische Zählvorrichtung den Zutritt einer Person zu dem Verladebereich feststellt, wird an die in dem Verladebereich arbeitenden autonomen Fahrzeuge ein Steuersignal übermittelt, beispielsweise über eine sichere Schnittstelle oder Kommunikationsschnittstelle zwischen der optischen Zählvorrichtung oder einer übergeordneten Steuereinheit und dem jeweiligen autonomen Fahrzeug, wodurch weitere autonome Bewegungen durch die im Verladebereich befindlichen AGVs nicht mehr ausgeführt werden können. Dieser Zustand kann auch als Verriegelungszustand bezeichnet werden. In diesem Zustand werden keine autonomen Bewegungen der autonomen Fahrzeuge zugelassen. Zusätzlich kann auf andere Absicherungssysteme umgeschaltet werden. Damit ist die Sicherheit von Personen, die den Verladebereich oder die Verladezone betreten, gewährleistet.

Gemäß einer Weiterbildung ist der mindestens eine Zugangspunkt mit einer weiteren optischen Zählvorrichtung versehen. Alternativ weist der Verladebereich einen weiteren Zugangspunkt auf, welcher mit der weiteren optischen Zählvorrichtung versehen ist. Die weitere optische Zählvorrichtung ist zum optischen Erfassen einer weiteren Anzahl von Passagen von Personen über den Zugangspunkt oder den weiteren Zugangspunkt eingerichtet. Das Verfahren weist zusätzlich das Bilden eines Gesamtzählerstandes auf Basis der Anzahl und der weiteren Anzahl von Passagen von Personen über den Zugangspunkt und/oder den weiteren Zugangspunkt auf.

In dieser Weiterbildung sind zwei oder mehr optische Zählvorrichtungen vorgesehen. Wenn der Verladebereich sich beispielsweise über einen Kreuzungspunkt oder ein Hochregallager erstreckt, sind die Zählvorrichtungen an separaten Zugangspunkten angeordnet. Falls ein Zugangspunkt einen größeren räumlichen Bereich abdeckt, sind zwei oder mehr optische Zählvorrichtungen an einem Zugangspunkt angeordnet. Die optischen Zählvorrichtungen sind funktional gleich ausgestaltet. Auf Basis der von den optischen Zählvorrichtungen jeweils ermittelten Anzahlen von Passagen von Personen wird ein Gesamtzählerstand ermittelt.

Der Gesamtzählerstand repräsentiert somit eine Bilanz der von den einzelnen Zählvorrichtungen ermittelten Anzahlen von Passagen. Das Betreten des Verladebereichs durch eine Person - egal über welchen Zugangspunkt - bewirkt eine Erhöhung des Gesamtzählerstands um Eins, während das Verlassen des Verladebereichs durch eine Person über einen beliebigen Zugangspunkt zu einer Verringerung des Gesamtzählerstands um Eins führt. Werden mehrere Zugangspunkte und/oder mehrere Zählvorrichtungen und der Gesamtzählerstand verwendet, so kann das Beladen und/oder Entladen unterbrochen werden, sobald der Gesamtzählerstand von einem vorbestimmten Wert abweicht, wobei der vorbestimmte Wert bevorzugt Null ist (d.h. es darf sich keine Person in dem Verladebereich aufhalten).

Erfindungsgemäß kann jeder Zugangspunkt zu dem Verladebereich mit mindestens einer optischen Zählvorrichtung versehen sein. Durch die Zählung der Zu- und/oder Austritte zum bzw. vom Verladebereich wird in dem vorgeschlagenen Verfahren auf die Anwesenheit von Personen im Verladebereich geschlossen. Der Verladebereich ist so gestaltet, dass er zumindest von Personen nur über den oder die Zugangspunkte betreten und verlassen werden kann. Sofern genau ein Zugangspunkt vorhanden ist, befindet sich dieser z.B. an der Stelle, wo der Lkw an dem Verladebereich andockt, also beispielsweise am Andocktor. Jeder Zugangspunkt kann von Personen und AGVs durchquert werden. Mit jeder optischen Zählvorrichtung wird das Durchqueren, der Übertritt oder die Passage einer Person sicher erkannt und von dem Überqueren durch ein AGV unterschieden.

Die Geometrie des Verladebereichs unterliegt keinen weiteren Anforderungen, ist also beliebig. Die vorgeschlagene Lösung ist demnach auch geeignet für den Einsatz bei komplexen, beispielsweise verwinkelten, Geometrien, die mit einer Überwachung durch herkömmliche Laserscanner nicht abgesichert werden können.

Gemäß einer Weiterbildung erfolgt das Aktivieren des Beladens und/oder Entladens durch eine Bedienperson oder automatisiert nach Auswertung der mit der mindestens einen optischen Zählvorrichtung ermittelten Anzahl oder eines Gesamtzählerstands. Insbesondere kann dies unter Verwendung mindestens eines weiteren Sensors, beispielsweise eines Radarsensors erfolgen. Dabei wird sichergestellt, dass sich keine Person in einem Laderaum des Lkws und den Verladebereich befindet.

Nach dem Andocken des Lkws an dem Verladebereich wird das automatische Be- und Entladen explizit aktiviert. Dies kann durch einen einmaligen Eingriff einer Bedienperson erfolgen. Diese überzeugt sich davon, dass der Laderaum frei von Personen ist und quittiert diesen Zustand im System. Alternativ wird hierbei die Anzahl, die mit der mindestens einen Zählvorrichtung ermittelt wurde bzw. ein Gesamtzählerstand, der bei Vorhandensein mehrere optischer Zählvorrichtungen aus den jeweils ermittelten Anzahlen gebildet wird, ausgewertet. Zusätzlich kann/können hierfür ein oder mehrere weitere Sensoren eingesetzt und ausgewertet werden. Ein Radarsensor kann beispielsweise kleinste Bewegungen wie Atmung oder Herzschlag einer Person detektieren und somit Aufschluss darüber geben, ob sich eine oder mehrere Personen in dem Laderaum des Lkws oder/und in dem Verladebereich befindet bzw. befinden. Alternativ kann hierfür auch ein Sensor der optischen Zählvorrichtung selbst, beispielsweise eine 3D-Kamera, wiederverwendet werden. Dabei wird/werden der/die eingesetzten weiteren Sensoren vorteilhafterweise so angeordnet, dass sie jeweils eine andere Perspektive des Verladebereichs einsehen, um somit möglichst den ganzen Verladebereich abzudecken. Damit kann die Anwesenheit von Personen im Verladebereich, der einen Gefahrenbereich darstellt, festgestellt werden und das Aktivieren des automatischen Be- und Entladens erst dann erfolgen, wenn feststeht, dass sich keine Person im Gefahrenbereich befindet.

In einer weiteren Ausführungsform umfasst das Aktivieren des Beladens und/oder Entladens ein Freigeben der autonomen Bewegung des mindestens einen Fahrzeugs in dem Verladebereich durch Aussenden mindestens eines weiteren Steuersignals. Zudem startet das Aktivieren das Erfassen der Anzahl von Passagen über den mindestens einen Zugangspunkt.

Sobald sichergestellt ist, dass sich keine Person im Laderaum des Lkws oder in dem Verladebereich befindet, wird das Be- bzw. Entladen gestartet oder fortgesetzt und autonome Bewegungen, d.h. Bewegungen, die ausschließlich von einer Fahrzeugsteuerung des AGVs selbst gesteuert sind, werden ermöglicht. Mit anderen Worten, der oben genannte Verriegelungszustand wird aufgehoben. Eine Kontrolle der Bewegungen der AGVs in dem Verladebereich wird an die jeweilige Fahrzeugsteuerung zurückgegeben. Nach dem Aktivieren überwacht mindestens eine optische Zählvorrichtung den Ein- und Austritt von Personen zum Ladebereich und lässt den automatischen Be-/Entladeprozess, bei dem AGVs den mindestens einen Zugangspunkt passieren, zu, solange kein Zutritt durch eine Person festgestellt wird. Dies kann beispielsweise anhand der Überprüfung der von der bzw. jeder optischen Zählvorrichtung ermittelten Anzahl an Personen oder dem Gesamtzählerstand überprüft werden. Wenn diese Anzahl bzw. der Gesamtzählerstand gleich Null ist, ist der Verladebereich frei von Personen.

Gemäß einer Weiterbildung umfasst das optische Erfassen der Anzahl bzw. der weiteren Anzahl von Passagen von Personen über den Zugangspunkt jeweils folgendes:
Erfassen einer ersten Anzahl von Passagen über den Zugangspunkt unter Verwendung eines ersten Messkanals der optischen Zählvorrichtung,
zeitgleiches Erfassen einer zweiten Anzahl von Passagen über den Zugangspunkt unter Verwendung des ersten oder eines zweiten Messkanals der optischen Zählvorrichtung,
Vergleich der ersten Anzahl mit der zweiten Anzahl, und
Bereitstellen eines Ergebnissignals auf Basis des Vergleichs, wobei das Ergebnissignal einen Fehlerzustand anzeigt, wenn die erste Anzahl ungleich der zweiten Anzahl ist,
Bereitstellen der ersten oder zweiten Anzahl als Zählerstand der optischen Zählvorrichtung, wenn die erste Anzahl mit der zweiten Anzahl übereinstimmt.

Jede Passage einer Person über einen Zugangspunkt wird demgemäß zeitgleich mit zwei unterschiedlichen Messkanälen erfasst. Jeder Messkanal liefert eine Anzahl. Stimmen die Anzahlen beider Messkanäle überein, so wird eine der Anzahlen als Zählerstand ausgegeben. Sofern die Anzahlen nicht übereinstimmen, wird mit dem Ergebnissignal ein Fehlerzustand angezeigt. Der Fehlerzustand weist beispielsweise auf ein nicht ordnungsgemäßes Funktionieren der optischen Zählvorrichtung hin oder auf eine unklare Erkennung, wenn beispielsweise gleichzeitig mehrere Personen den Zugangspunkt passieren oder eine Person aufgrund eines mitgeführten Gegenstands nicht sicher erkannt werden kann. In jedem dieser Fälle kann auf den Fehlerzustand reagiert werden, indem an alle autonomen Fahrzeuge in dem Verladebereich ein Steuersignal gesendet wird, welches weitere autonome Bewegungen in dem Verladebereich unterbindet. Die Sicherheit für Personen ist somit zu jedem Zeitpunkt gewährleistet.

In einer Weiterbildung umfasst das Erfassen der zweiten Anzahl von Passagen über den mindestens einen Zugangspunkt unter Verwendung des zweiten Messkanals der optischen Zählvorrichtung eine Auswertung von in dem zweiten Messkanal ermittelten Sensordaten. Die Sensordaten weisen insbesondere dreidimensionale Bilddaten auf. Dabei erfolgt die Auswertung unter Einsatz von Methoden der künstlichen Intelligenz, insbesondere unter Verwendung eines klassifizierenden neuronalen Netzes, welches darauf trainiert ist, die ermittelten Sensordaten nach mindestens einem vordefinierten Merkmal auszuwerten.

Dieses Merkmal kann beispielsweise ein Muster einer typischen Kopf-Schulter-Partie eines Menschen sein. Das eingelernte Merkmal kann von der künstlichen Intelligenz als lernendem System mit Vorteil als Basis zum automatischen Ableiten komplexer Signaturen eingesetzt werden. Das neuronale Netz wird beispielsweise als sogenanntes Englisch: Convolutional Neural Network, also konvolutionales neuronales Netz implementiert. Dieses wird vorab mit synthetischen oder realen Trainingsdaten trainiert. Dazu werden annotierte oder gelabelte Trainingsdaten verwendet, die jeweils eine Person oder ein Objekt zeigen. Damit wird eine klassifizierende Personen- und Objekterkennung ermöglicht.

In einer Weiterbildung weist das Verfahren zusätzlich ein Auswerten des Ergebnissignals der optischen Zählvorrichtung und ein Unterbrechen des Beladens und/oder Entladens, falls das Ergebnissignal einen Fehlerzustand anzeigt, auf. Das Auswerten des Ergebnissignals umfasst ein vergleichendes Überprüfen der in dem ersten und dem zweiten Messkanal jeweils zeitgleich ermittelten Sensordaten.

Sofern erster und zweiter Messkanal einer jeweiligen Zählvorrichtung differierende Sensordaten ermitteln, wird dies als Indiz für einen Fehlerzustand interpretiert, was mit dem Ergebnissignal angezeigt wird. Bei einer derartigen unklaren bzw. nicht eindeutigen Erkennungslage, die sich in den unterschiedlichen Sensordaten widerspiegelt, wird das automatische Be- und/oder Entladen des Lkws sicherheitshalber unterbrochen. Damit wird in jedem Fall verhindert, dass eine Person den Verladebereich betritt, ohne dass das automatische Be-/Entladen des Lkws unterbrochen wird.

Weiterer Gegenstand der vorliegenden Anmeldung ist ein Sensorsystem zum Absichern eines automatischen Beladens und/oder Entladens eines Lkws an einem Verladebereich, wobei der Verladebereich mindestens einen Zugangspunkt aufweist. Das Sensorsystem weist mindestens eine optische Zählvorrichtung auf, die an dem mindestens einen Zugangspunkt angeordnet ist und zum optischen Erfassen einer Anzahl von Passagen von Personen über den mindestens einen Zugangspunkt eingerichtet ist. Das Sensorsystem ist dazu eingerichtet, den mindestens einen Zugangspunkt während des Beladens und/oder Entladens von zu verladenden Gegenständen durch mindestens ein autonomes Fahrzeug fortlaufend mit Hilfe der mindestens einen optischen Zählvorrichtung zu überwachen. Des Weiteren ist das Sensorsystem dazu eingerichtet, das Beladen und/oder Entladen zu unterbrechen, sobald die Zählvorrichtung eine Passage mindestens einer Person über dem mindestens einen Zugangspunkt detektiert.

Mit Hilfe der optischen Zählvorrichtung sichert das Sensorsystem das automatische Be- und/oder Entladen des Lkws ab. Die optische Zählvorrichtung wird dabei funktional als sicherer Personenzähler verwendet, der zuverlässig Zu- und Austritte von Personen zu/von dem Verladebereich überwacht. Der Verladebereich ist dabei baulich so ausgestaltet, dass er von Personen nur über den Zugangspunkt betreten und verlassen werden kann. Auch AGVs können den Zugangspunkt überqueren, dies ist zum Be- oder Entladen des Lkws jedoch nicht zwangsweise erforderlich, da zu verladende Gegenstände sich bereits im Verladebereich befinden können. Die in dem Sensorsystem verwendete optische Zählvorrichtung kann dabei sicher unterscheiden zwischen der Passage bzw. Überquerung des Zugangspunkts durch eine Person und durch ein AGV. Über diese sichere Erkennung und Zählung von Personen besteht in jedem Moment sicher Kenntnis über die Anwesenheit von Personen im Verladebereich, wodurch es möglich wird, das automatische Be- und Entladen eines Lkws auf tatsächlich sichere Art und Weise zu bewerkstelligen.

In einer Weiterbildung weist das Sensorsystem eine weitere optische Zählvorrichtung und eine Zählereinheit auf, welche mit der optischen Zählvorrichtung und der weiteren optischen Zählvorrichtung gekoppelt ist. Die Zählereinheit ist dazu eingerichtet, aus der in der jeweiligen optischen Zählvorrichtung erfassten Anzahl an Passagen einen Gesamtzählerstand zu ermitteln.

Bei komplexeren Geometrien bzw. einem baulich nicht ganz abgeschlossenen Verladebereich kann es erforderlich sein, mindestens eine weitere optische Zählvorrichtung vorzusehen. Diese kann an einem weiteren Zugangspunkt zu dem Verladebereich angebracht sein, oder an dem mindestens einen Zugangspunkt, wenn dieser sich über einen Bereich erstreckt, der die Größe eines Sichtfeldes der mindestens einen optischen Zählvorrichtung übersteigt. In jedem Fall ist die übergeordnete Zählereinheit vorgesehen, welche mit beiden bzw. allen optischen Zählvorrichtungen des Sensorsystems gekoppelt ist, um die von diesen jeweils ermittelte Anzahl von Personen zu erhalten und daraus den Gesamtzählerstand zu bilden bzw. zu errechnen. Dazu ist die Zählereinheit über eine geeignete Kommunikationsschnittstelle, beispielsweise eine drahtlose Netzwerkschnittstelle wie dem Englisch Wireless Local Area Network, WLAN, mit den jeweiligen optischen Zählvorrichtungen verbunden.

In einer Weiterbildung umfasst die mindestens eine und/oder die weitere optische Zählvorrichtung jeweils einen ersten Messkanal, einen zweiten Messkanal und eine Steuereinheit. Der erste Messkanal ist zum Bereitstellen eines ersten Messsignals in Abhängigkeit einer von dem ersten Messkanal erfassten ersten Anzahl von Passagen über den mindestens einen Zugangspunkt oder den weiteren Zugangspunkt eingerichtet. Dabei umfasst der erste Messkanal einen ersten optischen Sensor, insbesondere eine Kamera. Der zweite Messkanal ist zum Bereitstellen eines zweiten Messsignals in Abhängigkeit einer von dem zweiten Messkanal erfassten zweiten Anzahl von Passagen über den mindestens einen Zugangspunkt oder den weiteren Zugangspunkt eingerichtet. Der zweite Messkanal umfasst den ersten oder einen zweiten optischen Sensor, insbesondere einen mehrlagigen Laserscanner. Die Steuereinheit ist zum Bereitstellen eines Ergebnissignals in Abhängigkeit eines Vergleichs der ersten Anzahl mit der zweiten Anzahl eingerichtet. Dabei ist das Ergebnissignal dazu geeignet, einen Fehlerzustand zu signalisieren, wenn die erste Anzahl ungleich der zweiten Anzahl ist. Des Weiteren ist die Steuereinheit zum Bereitstellen der ersten oder zweiten Anzahl als Zählerstand oder als weiterer Zählerstand eingerichtet, wenn die erste Anzahl mit der zweiten Anzahl übereinstimmt.

Jede innerhalb des Sensorsystems verwendete optische Zählvorrichtung weist zwei Messkanäle auf, welche separat, aber nahezu gleichzeitig oder gleichzeitig, die Anzahl von Passagen über einen jeweiligen Zugangspunkt erfassen. In der Steuereinheit werden die jeweils ermittelten Anzahlen verglichen. Bei Übereinstimmung wird die jeweilige Anzahl als Zählerstand ausgegeben, bei nicht übereinstimmen wird ein Fehlerzustand signalisiert. Dieser kann beispielsweise das Resultat eines zeitgleichen Durchtritts mehrerer Personen über den Zugangspunkt sein, was meist zur gegenseitigen Verdeckung dieser Personen führt. Eine sicherheitsgerichtete Erkennung ist dann unter Umständen nicht möglich, was sich in unterschiedlich ermittelten Anzahlen der beiden Messkanälen zeigt. Es können aber auch interne Hardware- oder Softwarefehler in einer jeweiligen optischen Zählvorrichtung auftreten, welche zum Signalisieren eines Fehlerzustands führen. In jedem Fall kann ein derartiger Fehlerzustand zuverlässig erkannt werden und sicherheitsgerichtet darauf reagiert werden, indem das automatische Be- und Entladen unterbrochen wird.

In einer Weiterbildung umfasst der zweite Messkanal ein klassifizierendes neuronales Netz, welches darauf trainiert ist, von dem ersten oder dem zweiten Sensor ermittelte Sensordaten, welche insbesondere dreidimensionale Bilddaten umfassen, nach mindestens einem vordefinierten Merkmal auszuwerten.

Zur Aufdeckung der sicherheitsrelevanten Zustände, welche zur Erzeugung eines Fehlerzustands führen, kommen beispielsweise interne Zustandsbewertungen des klassifizierenden neuronalen Netzes, welches als KI-System bezeichnet werden kann, selbst zum Einsatz. Alternativ kann eine sekundäre Überwachung auf Basis konventioneller Algorithmen eingesetzt werden. In einer beispielhaften Realisierung wird parallel zur Auswertung der von dem zweiten Sensor ermittelten Sensordaten durch das neuronale Netz ein klassischer Algorithmus eingesetzt, der relevante Objekte im Sichtbereich des Sensors durch einen Unterschied zu einem eingelernten Hintergrund erkennt, verfolgt und gegebenenfalls zählt. Die von diesem klassischen Algorithmus gewonnen Objektinformationen können dann zum Abgleich mit den Ergebnissen des neuronalen Netzes und somit zu dessen Plausibilisierung verwendet werden. In diesem Zuge wird beispielsweise überprüft, ob beide Auswertungen an denselben Stellen im Überwachungsbereich Objekte detektiert haben, ob diese Objekte ähnliche Eigenschaften aufweisen, ob es eine zeitliche Konsistenz der Bewertung über das gesamte Durchtrittsereignis gibt und ähnliches.

Der erste und/oder der zweite optische Sensor sind beispielsweise Überkopf an dem mindestens einen oder an dem weiteren Zugangspunkt angebracht, so dass eine optimale Personenzählung möglich ist.

In einer Weiterbildung weist das Sensorsystem zusätzlich eine Kommunikationseinheit auf. Das Sensorsystem ist dazu eingerichtet, mittels der Kommunikationseinheit mindestens ein Steuersignal an das mindestens eine autonome Fahrzeug zu senden, wobei das Steuersignal ein Unterbinden oder ein Freigeben der autonomen Bewegung des mindestens einen autonomen Fahrzeugs in dem Verladebereich bewirkt.

Beispielsweise sendet das Sensorsystem mit Hilfe der Kommunikationseinheit an die im Verladebereich befindlichen autonomen Fahrzeuge, z.B. AGVs, ein Stoppsignal, wodurch die von den betreffenden Fahrzeugen normalerweise selbst gesteuerten Fahrbewegungen unterbunden werden. Dies kann der Fall sein, wenn das Sensorsystem den Zutritt einer Person zu dem Verladebereich detektiert.

Zudem kann dies zu Beginn des Verlade- oder Entladeprozesses erfolgen, wenn überprüft werden soll, ob sich zu diesem Zeitpunkt eine oder mehrere Personen in dem Verladebereich befindet/befinden. Sobald sichergestellt ist, dass sich keine Person im Verladebereich befindet, beispielsweise nach Auswertung der Zählerstände bzw. des Gesamtzählerstandes, sendet das Sensorsystem über die Kommunikationseinheit ein Startsignal als Steuersignal, um die autonomen Bewegung der AGVs im Verladebereich freizugeben und damit das Be- bzw. Entladen des Lkws zu beginnen oder fortzusetzen.

Die Kommunikationseinheit umfasst dabei im Wesentlichen eine Kommunikationsschnittstelle, beispielsweise eine WLAN-Schnittstelle, sowie die dafür erforderliche, der Fachperson bekannte, Protokollsoftware. Gegebenenfalls wird die Kommunikationsschnittstelle zur Übermittlung des Zählerstandes wiederverwendet.

In einer weiteren Ausführungsform erteilt das Sensorsystem mittels des Steuersignals die Freigabe der automatisierten Bewegung des/der AGVs nur für einen begrenzten Zeitraum. In diesem Fall sendet das Sensorsystem fortlaufend bzw. in periodischen Zeitabständen weitere Freigaben, um einen kontinuierlichen Be- und Entladeprozess zu ermöglichen. Das hat den Vorteil, dass Fehlerfälle der Kommunikation oder des Sensorsystems automatisch dadurch beherrscht werden, dass die Freigabesignale ausbleiben und das Fahrzeug automatisch nach kurzer Zeit stoppt.

In einer Weiterbildung weist das Sensorsystem eine Anzeige- und Bedieneinheit auf, die dazu eingerichtet ist, ein Aktivieren des Beladens und/oder Entladens durch eine Bedienperson zu ermöglichen. Insbesondere ist die Anzeige- und Bedieneinheit dazu eingerichtet, den Zählerstand der optischen Zähleinrichtung und/oder den weiteren Zählerstand der weiteren optischen Zähleinrichtung und/oder den Gesamtzählerstand anzuzeigen.

Für eine Ausführungsform, in der das automatische Be- und/oder Entladen des Lkws nach dessen Andocken an den Verladebereich manuell durch eine Bedienperson gestartet bzw. aktiviert wird, ist die demgemäß ausgestaltete Bedien- und Anzeigeneinheit vorgesehen. Die Bedienperson kann auf Basis der angezeigten Zählerstände und eventuell durch zusätzliches Überprüfen des Laderaums des Lkws durch Einnahme des Augenscheins das Beladen und/oder Entladen aktivieren, wenn sich keine Person im Verladebereich befindet.

In einer Weiterbildung weist das Sensorsystem zusätzlich mindestens einen weiteren Sensor auf, der dazu eingerichtet ist, eine Anwesenheit von mindestens einer Person in einem Laderaum des Lkws und/oder im Verladebereich zu detektieren. Dieser mindestens eine weitere Sensor ist insbesondere als Radarsensor ausgeführt.

Der mindestens eine weitere Sensor detektiert beispielsweise kleinste Bewegungen einer Person wie Herzschlag oder Atmung. Der Sensor ist dazu an geeigneter Stelle angebracht, beispielsweise an dem mindestens einen Zugangspunkt, wenn der Lkw mit seinem Laderaum an diesen Zugangspunkt und somit an den Verladebereich andockt. Somit kann automatisch detektiert werden, ob sich im Zeitpunkt des Andockens bereits eine Person im Laderaum des Lkws befindet. Diese Information wird beim Aktivieren des automatischen Be- bzw. Entladens des Lkws anschließend entsprechend genutzt. Alternativ oder zusätzlich wird der mindestens eine weitere Sensor eingesetzt, um redundante Sensordaten zu den von der Zählvorrichtung ermittelten Sensordaten bereitzustellen und mit Hilfe dieser Redundanz die Sicherheit des automatischen Be-/Entladens des Lkws noch weiter zu erhöhen. Alternativ oder zusätzlich ist der mindestens eine weitere Sensor als weiterer optischer 3D-Sensor ausgeführt und so an dem Verladebereich angebracht, dass er eine andere Perspektive einnimmt als der Sichtbereich der optischen Zählvorrichtung und/oder der weiteren optischen Zählvorrichtung. Der mindestens eine weitere Sensor kann dann beispielsweise bei Auftreten eines Fehlerzustands zur Ermittlung der Ursache desselben und zum automatischen Fortführen des Be- und Entladens des Lkws eingesetzt werden.

In einer Realisierungsmöglichkeit wird das oben beschriebene Verfahren von dem beschriebenen und beanspruchten Sensorsystem ausgeführt. Im Übrigen gelten für das Sensorsystem die Ausführungen zu dem erfindungsgemäßen Verfahren entsprechend, insbesondere hinsichtlich Vorteilen und Ausführungsformen bzw. Weiterbildungen.

Im Folgenden wird die optische Zählvorrichtung detailliert beschrieben.

In einer Ausführungsform weist die optische Zählvorrichtung einen ersten Messkanal, einen zweiten Messkanal und eine Steuereinheit auf. Die Zählvorrichtung ist für die Verwendung zum Absichern des oben beschriebenen automatischen Beladens und/oder Entladens eines Lkws ausgebildet und eingerichtet. Der erste Messkanal ist zum Bereitstellen eines ersten Messsignals in Abhängigkeit einer von dem ersten Messkanal erfassten ersten Anzahl von Passagen über den mindestens einen Zugangspunkt ausgelegt. Der zweite Messkanal ist zum Bereitstellen eines zweiten Messsignals in Abhängigkeit einer von dem zweiten Messkanal erfassten zweiten Anzahl von Passagen über den mindestens einen Zugangspunkt eingerichtet. Die Steuereinheit ist zum Bereitstellen eines Ergebnissignals in Abhängigkeit eines Vergleichs der ersten Anzahl mit der zweiten Anzahl ausgelegt. Dabei ist das Ergebnissignal dazu geeignet, einen Fehlerzustand zu signalisieren, wenn die erste Anzahl ungleich der zweiten Anzahl ist.

In der zweikanaligen Zählvorrichtung ermittelt jeder Kanal unabhängig vom anderen Kanal eine Anzahl von Passagen über den mindestens einen Zugangspunkt. Eine Passage bezieht sich auf einen Durchtritt, Durchgang oder Übertritt über den Zugangspunkt und betrifft sowohl die Richtung in den Verladebereich hinein als auch die entgegengesetzte Richtung aus dem Verladebereich heraus. Der erste Messkanal ermittelt die erste Anzahl von Passagen, während zeitgleich der zweite Messkanal die zweite Anzahl von Passagen ermittelt. Das Ergebnissignal ist so ausgelegt, dass es einen Fehlerzustand anzeigt, wenn die erste und die zweite Anzahl voneinander abweichen.

Die Redundanz, die sich aus dem zweikanaligen Ansatz der angegebenen Zählvorrichtung ergibt, in Verbindung mit der im Ergebnissignal reflektierten Auswertung der Zählergebnisse ermöglicht mit Vorteil eine Erfüllung der Anforderungen der funktionalen Sicherheit. Zudem wird es mit Hilfe der Signalisierung von Fehlerzuständen im Ergebnissignal möglich, einen Fehlerzustand, beispielsweise innerhalb der Zählvorrichtung, auch automatisch zu korrigieren.

Gemäß einer Weiterbildung umfasst der erste Messkanal eine erste Sensoranordnung und einen damit verbundenen ersten Zähler. Der zweite Messkanal umfasst die erste Sensoranordnung, eine damit verbundene Umwandlungseinheit und einen damit verbundenen zweiten Zähler. Alternativ umfasst der zweite Messkanal eine zweite Sensoranordnung und einen damit verbundenen zweiten Zähler.

Sowohl der erste Zähler als auch der zweite Zähler werden so betrieben, dass der jeweilige Zähler bei einer in dem jeweiligen Messkanal erfassten Passage in eine Richtung, beispielsweise in den Verladebereich hinein, inkrementiert wird, wohingegen der jeweilige Zähler bei einer erfassten Passage in die entgegengesetzte Richtung, also im vorliegenden Beispiel aus dem Verladebereich heraus, dekrementiert wird.

Der erste und der zweite Zähler zählen die Passagen über den Zugangspunkt also aufgrund ihrer Zugehörigkeit zu einem jeweiligen anderen Messkanal unabhängig voneinander. Dies ermöglicht es, fehlerhafte Zählereignisse, die sich in voneinander abweichenden Zählerständen manifestieren, zu erkennen und als Fehlerzustand zu signalisieren.

Der zweite Messkanal kann dabei gemäß einer möglichen Implementierung die erste Sensoranordnung des ersten Messkanals wiederverwenden, wobei der zweite Messkanal in diesem Fall die Umwandlungseinheit umfasst, die das von der ersten Sensoranordnung ausgegebene Signal für den zweiten Zähler aufbereitet. Vorteilhafterweise wird hier trotz der Verwendung nur einer Sensoranordnung eine Zweikanaligkeit und damit Redundanz realisiert, welche die Anforderungen der funktionalen Sicherheit erfüllt.

In der alternativen Ausgestaltung umfasst der zweite Messkanal die zweite Sensoranordnung und den zweiten Zähler, aber keine Umwandlungseinheit. In dieser Alternative ist eine separate zweite Sensoranordnung vorgesehen, wodurch es möglich wird, die Redundanz noch weiter zu erhöhen. Beispielsweise kann die zweite Sensoranordnung anders implementiert sein als die erste Sensoranordnung.

In einer Ausgestaltung umfasst die erste Sensoranordnung den ersten optischen Sensor und eine damit gekoppelte erste Verarbeitungseinheit. Der erste optische Sensor ist dazu ausgebildet, weitestgehend alle Passagen über den Zugangspunkt optisch zu erfassen und daraus ein erstes Sensorsignal bereitzustellen. Die erste Verarbeitungseinheit ist dazu eingerichtet, das erste Sensorsignal nach mindestens einem vordefinierten ersten Merkmal zu verarbeiten und daraus ein Objektsignal bereitzustellen. Insbesondere ist der erste optische Sensor als Kamera ausgeführt.

Der erste optische Sensor umfasst beispielsweise eine klassische Sicherheitskamera. Ein derartiges sicheres Kamerasystem tastet seine Umgebung beispielsweise mit infraroten Laserstrahlen dreidimensional ab. Sobald sich ein Objekt im Sichtbereich oder Erfassungsbereich befindet, meldet das Kamerasystem die Detektion beispielsweise durch einen Signalwechsel in dem bereitgestellten Sensorsignal, hier das erste Sensorsignal. Die erste Verarbeitungseinheit wertet das erste Sensorsignal gemäß des mindestens einen vordefinierten Merkmals aus. Das erste Merkmal ist beispielsweise so vordefiniert, dass mit dem Objektsignal alle beim Überschreiten des Zugangspunkts detektierten Objekte weitergeleitet werden, die eine Person sein könnten. Beispielsweise wird das erste Merkmal bezüglich einer Höhe über dem Boden, einer räumlichen Ausdehnung oder einer Bewegungsgeschwindigkeit definiert. Objekte, die aufgrund des ersten Merkmals weitestgehend eindeutig als Nichtperson erkannt werden, werden nicht mit dem Objektsignal weitergeleitet. Bei Einsatz einer auf den Bildraum oder den daraus abgeleiteten metrischen Raum bezogenen Mindestausdehnung des detektierten Objekts als erstes Merkmal, werden z.B. nur Objekte erkannt, die in zumindest einer einsehbaren Dimension sehr klein sind und damit bereits anatomisch keine Person sein können. Die erste Sensoranordnung ist folglich daraufhin ausgelegt, in grenzwertigen Fällen bei der Unterscheidung zwischen Objekt und Person auch ein möglicherweise fälschlich als Person erkanntes Objekt mit dem Objektsignal weiterzuleiten.

In einer Ausgestaltung ist die Umwandlungseinheit dazu eingerichtet, ein von der ersten Sensoranordnung bereitgestelltes Signal nach mindestens einem vordefinierten zweiten Merkmal auszuwerten und daraus ein Personensignal bereitzustellen.

In der oben bereits geschilderten Ausführung der Zählvorrichtung, bei der die erste Sensoranordnung im zweiten Messkanal wiederverwendet wird, wertet die Umwandlungseinrichtung das von der Sensoranordnung bereitgestellte Signal, also das Objektsignal, weiter aus. Dafür wird das mindestens eine zweite vordefinierte Merkmal eingesetzt, beispielsweise mindestens ein spezifisches Merkmal für eine Person. Hierfür werden spezifische menschliche Konturen, wie zum Beispiel das vertikale Kopf-Schulter-Profil, eingesetzt. Weitere Beispiele sind personentypische Bewegungsmuster, z.B. eine beim Gehen normale Pendelbewegung oder eine erkannte, nicht einheitliche Bewegung innerhalb des Objekts, wie zum Beispiel von Armen, die sich relativ zum Körper bewegen. Demzufolge werden mit dem Personensignal weitestgehend nur Passagen weitergeleitet, die durch Personen erfolgt sind. Passagen durch Objekte, die mit an Sicherheit grenzender Wahrscheinlichkeit keine Person sind, werden somit nicht mit dem Personensignal weitergeleitet.

In einer Weiterbildung umfasst die zweite Sensoranordnung den zweiten optischen Sensor und eine damit gekoppelte zweite Verarbeitungseinheit. Der zweite optische Sensor ist dazu ausgebildet, weitestgehend alle Passagen über den Zugangspunkt optisch zu erfassen und daraus ein zweites Sensorsignal bereitzustellen. Die zweite Verarbeitungseinheit ist dazu eingerichtet, das zweite Sensorsignal nach mindestens einem vordefinierten dritten Merkmal auszuwerten und daraus ein Personensignal zu erzeugen. Der zweite optische Sensor ist dabei insbesondere als mehrlagiger Laserscanner ausgebildet.

Der zweite optische Sensor ist beispielsweise als dreidimensionaler Lidar, Englisch: Light Detection and Ranging, Sensor realisiert, der sein Sichtfeld in mehreren, beispielsweise vier, aufgespreizten Lagen, abtastet und zuverlässig Objekt erkennt. Die zweite Verarbeitungseinheit wertet das auf diese Weise bereitgestellte zweite Sensorsignal bezüglich des mindestens einen dritten vordefinierten Merkmals aus. Beispielsweise wird für das dritte vordefinierte Merkmal die Kontur eines Menschen, insbesondere die Kopf-Schulter-Partie verwendet. Folglich werden mit dem Personensignal nur die Passagen über den Zugangspunkt weitergeleitet, die das dritte vordefinierte Merkmale erfüllen und mit an Sicherheit grenzender Wahrscheinlichkeit nicht durch Objekte erfolgt sind.

Gemäß einer Weiterbildung weist die zweite Verarbeitungseinheit das klassifizierendes neuronales Netz auf. Dieses ist darauf trainiert, das zweite Sensorsignal nach dem mindestens einen vordefinierten dritten Merkmal auszuwerten und das Personensignal auszugeben.

Für die Auswertung der mit dem zweiten Sensorsignal bereitgestellten 3D-Scandaten wird das klassifizierende neuronale Netz verwendet, welches vorab auf das mindestens eine dritte vordefinierte Merkmal trainiert wurde. Dieses Merkmal kann beispielsweise ein Muster einer typischen Kopf-Schulter-Partie eines Menschen sein. Das eingelernte Merkmal kann von dem lernenden System mit Vorteil als Basis zum automatischen Ableiten komplexer Signaturen eingesetzt werden.

Die zweite Verarbeitungseinheit kann als Software- oder Firmwaremodul separat von dem zweiten Sensor realisiert sein oder mit diesem integriert sein, beispielsweise auf einem Ansteuerbaustein, Englisch: Controller, des zweiten optischen Sensors. Entsprechend kann die erste Verarbeitungseinheit getrennt vom ersten optischen Sensor oder integriert mit demselben realisiert sein.

In einer Weiterbildung überlappt ein Erfassungsbereich der ersten Sensoranordnung einen Erfassungsbereich der zweiten Sensoranordnung. Alternativ stimmen die Erfassungsbereiche der ersten und der zweiten Sensoranordnung überein. Dabei überdeckt ein jeweiliger Erfassungsbereich der ersten und der zweiten Sensoranordnung den Bereich eines jeweiligen Zugangspunkts.

Der Erfassungsbereich kann auch als Sichtbereich bezeichnet werden. Es ist der räumliche Bereich, in dem der jeweilige Sensor Objekte detektiert. Der erste und der zweite optische Sensor erstellen jeweils unabhängig voneinander beispielsweise eine 3D-Tiefenkarte mit gleicher oder unterschiedlicher Auflösung und stellen das jeweilige Sensorsignal entsprechend bereit.

In einer Weiterbildung ist der erste Zähler dazu eingerichtet, durch Auswertung eines von der ersten Sensoranordnung bereitgestellten Signals, beispielsweise des Objektsignals, einen ersten Zählerstand zu bilden und diesen als erste Anzahl mit dem ersten Messsignal der Steuereinheit zuzuführen. Der zweite Zähler ist dazu eingerichtet, auf Basis des von der ersten Sensoranordnung bereitgestellten Signals oder auf Basis eines von der zweiten Sensoranordnung bereitgestellten Signals, beispielsweise des Personensignals, einen zweiten Zählerstand zu bilden und diesen als zweite Anzahl mit dem zweiten Messsignal der Steuereinheit zuzuführen.

Der erste Zähler zählt somit die Passagen, bzw. Übertrittsereignisse, die mit dem Objektsignal zugeführt werden. Bei einem Eintritt in den Verladebereich wird der erste Zählerstand beispielsweise inkrementiert, wohingegen dieser bei einem Austritt aus dem Verladebereich dekrementiert wird. Somit zeigt der erste Zählerstand in diesem Beispiel die Anzahl von in dem Verladebereich zu einem gewissen Zeitpunkt befindlichen Personen oder Objekten an. Der zweite Zähler basiert auf dem ersten Sensorsignal, welches von der Umwandlungseinheit weiter ausgewertet wurde, oder auf dem von der zweiten Sensoranordnung bereitgestellten Signal. Der zweite Zählerstand spiegelt somit die aus dem Personensignal ermittelte Anzahl an zu einem bestimmten Zeitpunkt im Verladebereich befindlichen Personen wider. Die unterschiedliche Auswertung der jeweiligen Sensorsignale bedingt eine asymmetrische Struktur der Zählvorrichtung. Dies resultiert darin, dass die Zählerstände von erstem und zweitem Zähler unterschiedlich sein können. Im Normalfall sind erster und zweiter Zählerstand gleich. Eine Diskrepanz zwischen erstem und zweitem Zählerstand deutet jedoch auf ein fehlerhaftes Zählereignis hin.

In einer Weiterbildung ist die Steuereinheit zum Bereitstellen des Ergebnissignals nach einer einstellbaren Verzögerungszeit eingerichtet.

Der Vergleich der mit dem ersten und zweiten Messsignal gelieferten ersten und zweiten Zählerstände erfolgt möglicherweise erst nach einer Latenzzeit, um kurzzeitige Ungleichheiten der Zählerstände, die von unterschiedlichen Reaktionszeiten der eingesetzten optischen Sensoren resultieren können, auszugleichen.

Für den Fall, dass aus dem Ergebnissignal ersichtlich ist, dass die zweite Anzahl kleiner als die erste Anzahl ist, ist die Steuereinheit dazu eingerichtet, eine Differenz zwischen der zweiten und der ersten Anzahl optional zusammen mit einer Warnmeldung an der oben beschriebenen Bedien- und Anzeigeneinheit auszugeben, sowie den ersten und den zweiten Messkanal zu deaktivieren, bis die erste und die zweite Anzahl beispielsweise über die Bedien- und Anzeigeneinheit auf Null zurückgesetzt ist.

In dem Fall, in dem die zweite Anzahl kleiner als die erste Anzahl ist, hat der erste Zähler aus dem Objektsignal, welches unter Umständen mehr Passagen enthält, einen höheren Wert ermittelt als der zweite Zähler, der auf dem selektiveren Personensignal aufsetzt. Dies deutet darauf hin, dass fälschlicherweise ein Objekt als Person erkannt und gezählt wurde. Das Ereignis signalisiert also einen Fehlerzustand, welcher mit der Bedien- und Anzeigeneinheit auch einer Bedienperson angezeigt wird. Das automatische Be- und/oder Entladen des Lkws wird unterbrochen. Eine weitere Erfassung von Passagen wird durch Deaktivierung des ersten und zweiten Messkanals unterbunden, bis die Zählerstände wieder zurückgesetzt wurden. Das Rücksetzen der Zählerstände kann beispielsweise manuell durch eine Person an der Anzeige- und Bedieneinheit erfolgen. Alternativ kann ein nachgelagertes unabhängiges System das Rücksetzen der Zählerstände automatisch durchführen.

In einer Weiterbildung ist die Steuereinheit dazu eingerichtet, eine Fehlermeldung an der Bedien- und Anzeigeneinheit auszugeben, wenn das Ergebnissignal anzeigt, dass die zweite Anzahl größer als die erste Anzahl ist. Die Steuereinheit ist weiter dazu eingerichtet, in diesem Fall den ersten und den zweiten Messkanal zu deaktivieren, bis die erste und die zweite Anzahl möglicherweise über die Bedien- und Anzeigeneinheit auf Null zurückgesetzt ist.

Wenn der auf Basis des selektiveren Personensignals ermittelte zweite Zählerstand einen höheren Wert anzeigt als der auf Basis des allgemeineren Objektsignals ermittelte erste Zählerstand, liegt unter Umständen ein grundsätzlicher Systemfehler in der Zählvorrichtung vor. Der mit dem Ergebnissignal signalisierte Fehlerzustand wird angezeigt, das automatische Be- und/oder Entladen des Lkws wird unterbrochen und die weitere Erfassung und Zählung von Passagen wird vorübergehend ausgesetzt. Ein Rücksetzen der Zählerstände, beispielsweise manuell durch eine autorisierte Person, ist erforderlich, bevor die Zählvorrichtung weiter betrieben wird.

Die hierin beschriebene Zählvorrichtung bietet somit die Möglichkeit, aus den spezifischen Unterschieden der beiden Messkanäle, die unter Umständen zu unterschiedlichen Zählerständen führen, unterschiedliche Systemreaktionen abzuleiten. Wenn die Zählerstände voneinander abweichen, wird das automatisierte Be- und/oder Entladen unterbrochen. Ferner kann ausgewertet werden, welcher Zähler den höheren Wert zeigt, und es wird entsprechend reagiert. Im Allgemeinen sind beide Messkanäle in der Lage, zuverlässig Passagen von Personen über den Zugangspunkt zu zählen, weshalb der erste und der zweite Zählerstand im Normalfall identisch sind. Abweichungen gibt es nur in Sonderfällen, wenn zum Beispiel durch das Mitführen von Objekten oder durch das Verdecken von Teilen einer Person die Merkmale weniger eindeutig sind. Die Logik der Steuereinheit ist damit so ausgelegt, dass beim Eintritt in den nicht Verladebereich nie zu wenige Personen gezählt werden und beim Verlassen des Verladebereichs nie zu viele Personen gezählt werden. Damit reduzieren sich fehlerhafte Zählereignisse auf Verfügbarkeitsprobleme, da die Anzahl der im nicht sicheren Bereich befindlichen Personen immer überschätzt wird. Zudem erlaubt es die vorgeschlagene Lösung, fehlerhafte Zählereignisse, die unter bestimmten Bedingungen entstanden sind, automatisch zu korrigieren. Beispielsweise in Fällen, in denen die verfügbaren Informationen, die mit dem ersten und dem zweiten Sensorsignal geliefert werden, beispielsweise nicht für eine zuverlässige Zählung ausreichen. In diesen Fällen schaltet die Steuereinheit die Zählvorrichtung ab, wodurch ein gefahrbringender Ausfall vermieden wird.

In einer Weiterbildung weist die Zählvorrichtung ein mit der Steuereinheit gekoppeltes Funkortungssystem auf. Das Funkortungssystem ist dazu eingerichtet, auf Basis von Funkortungsetiketten, auch bezeichnet als Englisch: Tags, Passagen über den Zugangspunkt zu erfassen, nach mindestens einem vordefinierten vierten Merkmal zu klassifizieren und daraus eine Anzahl von Passagen mit einem dritten Zähler zu ermitteln. Die Steuereinheit ist des Weiteren dazu eingerichtet, bei Anzeige eines Fehlerzustands im Ergebnissignal, die zweite Anzahl mit einem Stand des dritten Zählers zu vergleichen und bei Übereinstimmung die erste und die zweite Anzahl auf Null zurückzusetzen.

In dieser Weiterentwicklung wird die Zählvorrichtung durch das Funkortungssystem ergänzt und erweitert. Dieses kann als Radiofrequenzortungssystem, Englisch: Radio Frequency Identification, RFID, oder als Breitbandfunkortungssystem basierend auf Englisch: Ultra Wide Band, UWB, Technik realisiert sein. Die von den Tags übermittelte Identifikationsnummer ermöglicht eine Unterscheidung zwischen Personen und Objekten. Das vordefinierte vierte Merkmal kennzeichnet also eine Zuordnung zwischen der von dem Etikett übermittelten ID zu entweder einer Person oder einem Objekt. Entsprechend wird der dritte Zähler bei Passagen des Zugangspunkts durch Personen analog zu den Zählrichtungen des ersten und zweiten Zählers inkrementiert und dekrementiert. Bei Auftritt eines Fehlerzustands kann dieser dritte Zähler ergänzend betrachtet werden, um ein automatisches Rücksetzen des ersten und zweiten Zählers einzuleiten. Damit kann mit Vorteil eine Korrektur der Zähler in Echtzeit erfolgen, ohne dass es zu Verfügbarkeitseinbußen kommt.

Zusätzlich können bei der Auswertung des Ergebnissignals ergänzende Informationen verwendet werden, die von dezentralen Überwachungseinrichtungen, z.B. weiteren Laserscannern, im Verladebereich erhoben werden. Auch Zeitreiheninformationen, die die Zustände von vor und nach einer Passage widerspiegeln, können eingesetzt werden.

Die erste und/oder die zweite Verarbeitungseinheit kann konventionell oder auf Basis von künstlicher Intelligenz implementiert sein, solange beachtet wird, dass der erste Messkanal sehr zuverlässig möglichst alle Passagen über den Zugangspunkt, im Zweifelsfall auch durch Nichtpersonen, ermittelt und der zweite Messkanal demgegenüber restriktiver die Passagen durch Personen ermittelt.

Die genannten Ausführungsformen und Weiterbildungen können untereinander kombiniert werden, sofern sich nicht explizit etwas anderes ergibt oder beschrieben ist.

Die Erfindung wird nachfolgend beispielhaft anhand der Figuren näher erläutert. Funktions- bzw. wirkungsgleiche Elemente tragen gleiche Bezugszeichen. Es zeigen:
- Fig. 1: ein erstes beispielhaftes Szenario, bei dem das vorgeschlagene Verfahren bzw. Sensorsystem eingesetzt ist,
- Fig. 2: ein zweites beispielhaftes Szenario, in dem das vorgeschlagene Verfahren bzw. Sensorsystem eingesetzt ist,
- Fig. 3: eine erste beispielhafte Ausführungsform einer Zählvorrichtung wie vorgeschlagen, und
- Fig. 4: eine zweite beispielhafte Ausführungsform der Zählvorrichtung wie vorgeschlagen.

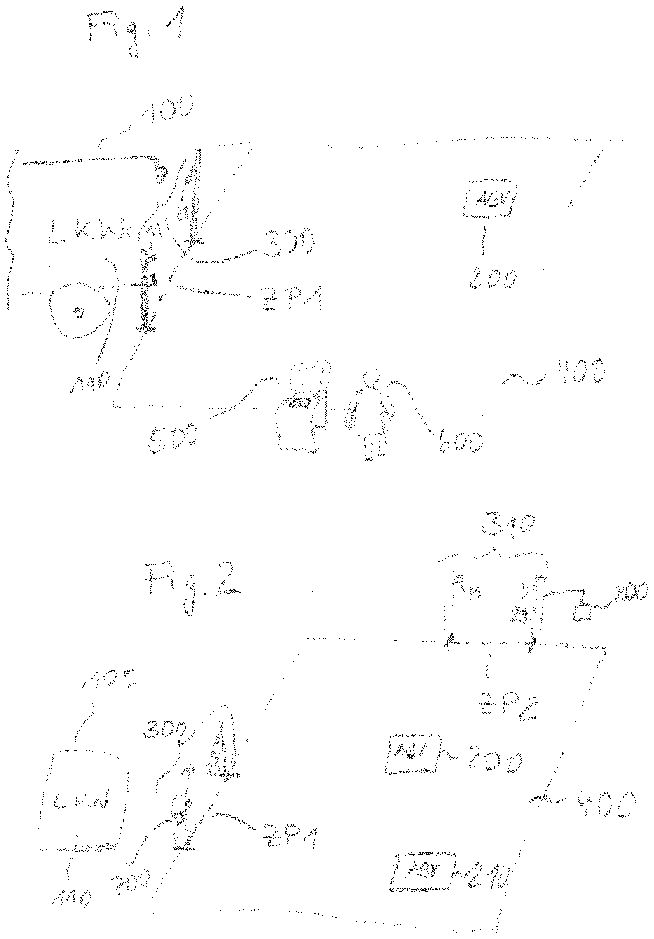

Fig. 1 zeigt ein beispielhaftes Szenario, bei dem das vorgeschlagene Verfahren bzw. Sensorsystem zum Absichern eines automatischen oder automatisierten Beladens und/oder Entladens eines Lkws eingesetzt wird. Das Szenario zeigt einen Verladebereich 400 mit einem Zugangspunkt ZP1. Der Zugangspunkt ZP1 ist versehen bzw. wird abgesichert mit der optischen Zählvorrichtung 300. Die Zählvorrichtung 300, die Teil des anspruchsgemäßen Sensorsystems ist, weist hier beispielhaft einen ersten optischen Sensor 11 und einen zweiten optischen Sensor 21 auf, die jeweils den Bereich des Zugangspunkts ZP1 überblicken. In dem Verladebereich 400 befindet sich zudem ein autonomes Fahrzeug 200, welches beim automatischen Be-/Entladen des Lkws 100 eingesetzt wird. Zudem ist eine beispielhafte Anzeige und Bedieneinheit 500 dargestellt, an der eine Bedienperson 600 beispielsweise von der optischen Zählvorrichtung 300 ermittelte Zählerstände ablesen kann und gegebenenfalls durch Eingeben eines entsprechenden Befehls den Beginn des automatischen Be- und Entladens des Lkws 100 manuell starten kann.

Entsprechend dem vorgeschlagenen Verfahren dockt der Lkw 100 an dem Verladebereich 400 an. Der Laderaum 110 des Lkws ist entsprechend geöffnet. Im gezeigten Szenario dockt der Lkw 100 an den von der optischen Zählvorrichtung 300 überwachten Zugangspunkt ZP1 an. Das automatische Be- und/oder Entladen des Lkws 100 mit Hilfe des autonomen Fahrzeugs 200 wird aktiviert. Der Vorgang wird fortlaufend abgesichert, indem der Zugangspunkt ZP1 mit der optischen Zählvorrichtung 300 überwacht wird. Das automatische Be-/Entladen wird unterbrochen, sobald die Zählvorrichtung 300 eine Passage einer Person über den Zugangspunkt ZP1 detektiert.

Fig. 2 zeigt ein weiteres beispielhaftes Szenario, bei dem das vorgeschlagene Verfahren sowie das vorgeschlagene Sensorsystem zum Einsatz kommt. Der Verladebereich 400 hat in diesem Fall einen ersten Zugangspunkt ZP1 und einen zweiten Zugangspunkt ZP2. Der erste Zugangspunkt ZP1 ist mit der optischen Zählvorrichtung 300 versehen, während der Zugangspunkt ZP2 mit der optischen Zählvorrichtung 310 versehen ist. Zum Be- und Entladen des Lkws 100 werden zwei AGVs 200, 210 eingesetzt. Wie im Szenario von Fig. 1 dockt der Lkw 100 an den ersten Zugangspunkt ZP1 an. Zu verladende Gegenstände befinden sich in diesem Szenario im Verladebereich 400 oder auch in einem angrenzenden Lager. Durch Passieren des Zugangspunkts ZP2 können die AGVs 200, 210 Gegenstände in das angrenzende Lager bringen bzw. von dort holen. Für Personen ist der Verladebereich 400 nur über den ersten oder zweiten Zugangspunkt ZP1, ZP2 betretbar. Die optischen Zählvorrichtungen 300 und 310 überwachen jeweils den Zugangspunkt, an dem sie angebracht sind. Sobald eine der beiden Zählvorrichtungen 300, 310 die Passage einer Person detektiert, wird das automatische Beladen und/oder Entladen des Lkws 100 unterbrochen.

Das Sensorsystem von Fig. 2 weist zusätzlich eine Zählereinheit 700 auf, welche hier beispielhaft an der Zählvorrichtung 300 angeordnet ist. Die Zählereinheit 700 kann beispielsweise als Softwaremodul innerhalb der Steuereinheit der Zählvorrichtung 300 implementiert sein. Die Zählereinheit 700 erstellt einen Gesamtzählerstand aus den jeweiligen Anzahlen, die die Zählvorrichtungen 300 und 310 ermitteln. In einer möglichen Realisierung ist dieser Gesamtzählerstand gleich Null, sofern sich keine Person im Verladebereich 400 befindet. Sobald der Gesamtzählerstand 700 auf Eins steigt, weil beispielsweise eine der beiden Zählvorrichtungen 300, 310 das Überschreiten ihres Zugangspunkts ZP1, ZP2 durch eine Person detektiert, wird das automatische Be- bzw. Entladen des Lkws 100 gestoppt. In diesem Zuge wird jedem der AGVs 200, 210 ein Steuersignal, beispielsweise ein Stoppsignal, gesendet, wodurch die AGVs 200 und 210 an der autonomen Weiterfahrt gehindert werden.

Im Szenario von Fig. 2 kann das Aktivieren des Beladens und/oder Entladens des Lkws 100 nach dessen Andocken an den ersten Zugangspunkt ZP1 automatisiert erfolgen, beispielsweise unter Auswertung des Gesamtzählerstandes der Zählereinheit 700. Zudem kann hierfür ein weiterer Sensor, beispielsweise der Radarsensor 800, eingesetzt werden. Dieser ist an der zweiten Zählvorrichtung 310 angebracht und wie beschrieben dafür ausgelegt, kleinste Bewegungen im Überwachungsbereich, der hier den Verladebereich 400 sowie den Laderaum 110 des Lkws 100 umfasst, zu detektieren.

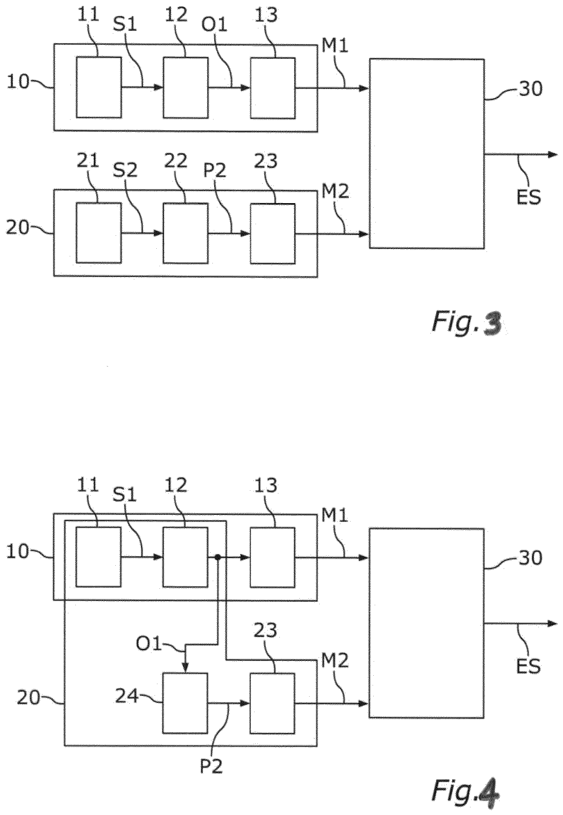

Fig. 3 zeigt eine erste beispielhaften Ausführungsform einer optischen Zählvorrichtung wie vorgeschlagen. Die Zählvorrichtung weist einen ersten Messkanal 10, einen zweiten Messkanal 20 und eine Steuereinheit 30 auf. Im ersten Messkanal 10 erfasst ein erster optischer Sensor 11 weitestgehend alle Passagen über einen Zugangspunkt, wie beispielsweise ZP1/ZP2 aus Figur 1 und 2. Der erste optische Sensor 11 erzeugt das erste Sensorsignal S1. Die erste Verarbeitungseinheit 12 wertet das erste Sensorsignal S1 nach mindestens einem vorgegebenen *ersten* Merkmal aus und erzeugt daraus das Objektsignal 01. Das Objektsignal O1 umfasst damit beispielsweise alle Passagen über die Grenze, die durch eine Person erfolgt sein könnten. Der erste Zähler 13 zählt die mit dem Objektsignal O1 übermittelten Passagen gemäß ihrer Richtung und stellt mit dem ersten Messsignal M1 seinen Zählerstand bereit.

Parallel dazu erfasst ein zweiter optischer Sensor 21 im zweiten Messkanal 20 zeitgleich zum ersten Messkanal 10 ebenfalls weitestgehend alle Passagen über den Zugangspunkt und stellt das zweite Sensorsignal S2 bereit. Dieses wird in der zweiten Verarbeitungseinheit 22 gemäß mindestens eines *dritten* vordefinierten Merkmals ausgewertet. Das Ergebnis wird mit dem Personensignal P2 ausgegeben. Verglichen mit dem Objektsignal O1 ist das Personensignal P2 restriktiver, nachdem das dritte Merkmal eine genauere Selektion der Übertrittsereignisse bewirkt. Somit erhält der dritte Zähler 23 mit dem Personensignal P2 alle Passagen, die wie im dritten Merkmal vorgegeben, möglichst ausschließlich durch Personen erfolgt sind, und ermittelt daraus deren Anzahl. Der Zählerstand des zweiten Zählers 23 wird mit dem zweiten Messsignal M2 an die Steuereinheit 30 übermittelt.

Diese vergleicht den Stand des ersten Zählers 13 mit dem Stand des zweiten Zählers 23 und erzeugt ein entsprechendes Ergebnissignal ES. Sofern die beiden Zählerstände nicht übereinstimmen, wird mit dem Ergebnissignal ES ein Fehlerzustand angezeigt.

Sowohl der erste als auch der zweite optische Sensor 11, 21 umfassen jeweils mindestens eine geeignete Kamera im Einklang mit obiger Beschreibung. Für einen oder beide optische Sensoren 11, 21 können auch mehrere Kameras eingesetzt werden, deren Sensorsignale jeweils zu einem Signal, nämlich dem ersten oder dem zweiten Sensorsignal S1, S2 in geeigneter Art und Weise zusammengeführt werden. Die Steuereinheit 30 kann auf einem separaten Gerät bzw. Rechner implementiert sein. Alternativ wird die Steuereinheit 30 beispielsweise auf einem Chip des ersten oder des zweiten optischen Sensorsystems realisiert.

Fig. 4 zeigt eine zweite beispielhafte Ausführungsform der Zählvorrichtung wie vorgeschlagen. Im Unterschied zur Fig. 3 wird das erste optische Sensorsystem 11, 12 im zweiten Messkanal 20 wiederverwendet. Zusätzlich ist hier die Umwandlungseinheit 24 vorgesehen, welche aus dem Objektsignal O1 durch Auswertung gemäß vordefiniertem *zweitem* Merkmal das Personensignal P2 erzeugt und dem zweiten Zähler 23 zuführt. Dabei kann das zweite vordefinierte Merkmal in ähnlicher Art und Weise definiert sein wie das bereits beschriebene dritte vordefinierte Merkmal.

Auch in der Umwandlungseinheit 24 können zur Klassifizierung der Passagen durch Personen Methoden der künstlichen Intelligenz eingesetzt werden. Beispielsweise wird hierfür ein sogenanntes Englisch: Convolutional Neural Network, also ein konvolutionales neuronales Netz verwendet. Dieses wird vorab mit synthetischen oder realen Trainingsdaten trainiert. Dazu werden annotierte oder gelabelte Trainingsdaten verwendet, die jeweils eine Person oder ein Objekt zeigen.

Damit wird eine klassifizierende Personen- und Objekterkennung ermöglicht, welche der Erzeugung des Personensignals P2 zugrunde liegt.

### Bezugszeichenliste

- 100: Lkw
- 110: Laderaum
- 200, 210: autonomes Fahrzeug
- 300, 310: Zählvorrichtung
- 400: Verladebereich
- 500: Anzeige- und Bedieneinheit
- 600: Bedienperson
- 700: Zählereinheit
- 800: weiterer Sensor
- ZP1,ZP2: Zugangspunkt
- 10, 20: Messkanal
- 11, 21: optischer Sensor
- 12, 22: Verarbeitungseinheit
- 13, 23: Zähler
- S1, S2: Sensorsignal
- O1, P2, M1, M2, ES: Signal
- 30: Steuereinheit

## Patentansprüche

1. Verfahren zum automatischen Beladen und/oder Entladen eines Lastkraftwagens (100), Lkws (100), an einem Verladebereich (400), wobei der Verladebereich (400) mindestens einen Zugangspunkt (ZP1) aufweist, und wobei der mindestens eine Zugangspunkt (ZP1) mit einer optischen Zählvorrichtung (300) versehen ist, welche zum optischen Erfassen einer Anzahl von Passagen von Personen (600) über den Zugangspunkt (ZP1) eingerichtet ist,
wobei das Verfahren die folgenden Schritte aufweist:
Andocken des Lkws (100) an den Verladebereich (400),
Aktivieren des Beladens und/oder Entladens,
Beladen und/oder Entladen von zu verladenden Gegenständen unter Verwendung von mindestens einem autonomen Fahrzeug (200) und unter fortlaufender Überwachung des mindestens einen Zugangspunkts (ZP1) mittels der optischen Zählvorrichtung (300), wobei das Beladen und/oder Entladen unterbrochen wird, sobald die Zählvorrichtung (300) eine Passage mindestens einer Person (600) über den mindestens einen Zugangspunkt (ZP1) detektiert.

2. Verfahren nach Anspruch 1,
wobei das Unterbrechen des Beladens und/oder Entladens ein Unterbinden einer autonomen Bewegung des mindestens einen autonomen Fahrzeugs (200) in dem Verladebereich (400) durch Aussenden mindestens eines Steuersignals an das mindestens eine Fahrzeug (200) umfasst.

3. Verfahren nach Anspruch 1 oder 2,
wobei der mindestens eine Zugangspunkt (ZP1) mit einer weiteren optischen Zählvorrichtung (310) versehen ist, oder wobei der Verladebereich (400) einen weiteren Zugangspunkt (ZP2) aufweist, welcher mit der weiteren optischen Zählvorrichtung (310) versehen ist, wobei die weitere optische Zählvorrichtung (310) zum optischen Erfassen einer weiteren Anzahl von Passagen von Personen (600) über den Zugangspunkt (ZP1) oder den weiteren Zugangspunkt (ZP2) eingerichtet ist,
wobei das Verfahren weiter aufweist:
Bilden eines Gesamtzählerstandes auf Basis der Anzahl und der weiteren Anzahl von Passagen von Personen (600) über den Zugangspunkt (ZP1) und/oder den weiteren Zugangspunkt (ZP2).

4. Verfahren nach einem der vorstehenden Ansprüche,
wobei das Aktivieren des Beladens und/oder Entladens durch eine Bedienperson (600) oder automatisiert nach Auswertung der mit der mindestens einen optischen Zählvorrichtung (300) ermittelten Anzahl oder eines Gesamtzählerstands und insbesondere unter Verwendung mindestens eines weiteren Sensors (800), beispielsweise eines Radarsensors, erfolgt, wobei sichergestellt wird, dass sich keine Person (600) in einem Laderaum (110) des Lkws (100) und dem Verladebereich (400) befindet.

5. Verfahren nach einem der vorstehenden Ansprüche,
wobei das Aktivieren des Beladens und/oder Entladens ein Freigeben der autonomen Bewegung des mindestens einen autonomen Fahrzeugs (200) in dem Verladebereich (400) durch Aussenden mindestens eines weiteren Steuersignals umfasst und das Erfassen der Anzahl von Passagen über den mindestens einen Zugangspunkt (ZP1) startet.

6. Verfahren nach einem der vorstehenden Ansprüche,
wobei das optische Erfassen der Anzahl bzw. der weiteren Anzahl von Passagen von Personen (600) über den Zugangspunkt (ZP1, ZP2) jeweils folgendes umfasst:
Erfassen einer ersten Anzahl von Passagen über den Zugangspunkt (ZP1, ZP2) unter Verwendung eines ersten Messkanals der jeweiligen optischen Zählvorrichtung (300),
zeitgleiches Erfassen einer zweiten Anzahl von Passagen über den Zugangspunkt (ZP1, ZP2) unter Verwendung eines zweiten Messkanals der optischen Zählvorrichtung (300),
Vergleich der ersten Anzahl mit der zweiten Anzahl,
Bereitstellen eines Ergebnissignals auf Basis des Vergleichs, wobei das Ergebnissignal einen Fehlerzustand anzeigt, wenn die erste Anzahl ungleich der zweiten Anzahl ist,
Bereitstellen der ersten oder zweiten Anzahl als Zählerstand der optischen Zählvorrichtung (300), wenn die erste Anzahl mit der zweiten Anzahl übereinstimmt.

7. Verfahren nach dem vorstehenden Anspruch,
wobei das Erfassen der zweiten Anzahl von Passagen über den Zugangspunkt (ZP1, ZP2) unter Verwendung des zweiten Messkanals der optischen Zählvorrichtung (300) eine Auswertung von in dem zweiten Messkanal ermittelten Sensordaten, welche insbesondere dreidimensionale Bilddaten aufweisen, umfasst, wobei die Auswertung unter Einsatz von Methoden der künstlichen Intelligenz, insbesondere unter Verwendung eines klassifizierenden neuronalen Netzes, welches darauf trainiert ist, die ermittelten Sensordaten nach mindestens einem vordefinierten Merkmal auszuwerten, erfolgt.

8. Verfahren nach einem der Ansprüche 6 oder 7,
weiter aufweisend Auswerten des Ergebnissignals der optischen Zählvorrichtung (300) und Unterbrechen des Beladens und/oder Entladens falls das Ergebnissignal einen Fehlerzustand anzeigt,
wobei das Auswerten des Ergebnissignals ein vergleichendes Überprüfen von in dem ersten und dem zweiten Messkanal jeweils zeitgleich ermittelten Sensordaten umfasst.

9. Sensorsystem zum Absichern eines automatischen Beladens und/oder Entladens eines Lastkraftwagens (100), Lkws (100), an einem Verladebereich (400), wobei der Verladebereich (400) mindestens einen Zugangspunkt (ZP1) aufweist,
wobei das Sensorsystem mindestens eine optische Zählvorrichtung (300) aufweist, die an dem mindestens einen Zugangspunkt (ZP1) angeordnet ist und zum optischen Erfassen einer Anzahl von Passagen von Personen (600) über den mindestens einen Zugangspunkt (ZP1) eingerichtet ist,
wobei das Sensorsystem dazu eingerichtet ist, den mindestens einen Zugangspunkt (ZP1) während des Beladens und/oder Entladens von zu verladenden Gegenständen durch mindestens ein autonomes Fahrzeug (200) fortlaufend mit Hilfe der mindestens einen optischen Zählvorrichtung (300) zu überwachen,
wobei das Sensorsystem weiter dazu eingerichtet ist, das Beladen und/oder Entladen zu unterbrechen, sobald die Zählvorrichtung (300) eine Passage mindestens einer Person (600) über den mindestens einen Zugangspunkt (ZP1) detektiert.

10. Sensorsystem nach dem vorigen Anspruch,
weiter aufweisend eine weitere optische Zählvorrichtung (310) und eine Zählereinheit (700), welche mit der optischen Zählvorrichtung (300) und der weiteren optischen Zählvorrichtung (310) gekoppelt ist und dazu eingerichtet ist, aus der in der jeweiligen optischen Zählvorrichtung (300, 310) erfassten Anzahl von Passagen einen Gesamtzählerstand zu ermitteln.

11. Sensorsystem nach Anspruch 9 oder 10,
wobei die mindestens eine und/oder die weitere optische Zählvorrichtung (300, 310) jeweils folgendes umfasst/umfassen:
einen ersten Messkanal (10) zum Bereitstellen eines ersten Messsignals (M1) in Abhängigkeit einer von dem ersten Messkanal (10) erfassten ersten Anzahl von Passagen über den mindestens einen Zugangspunkt (ZP1) oder den weiteren Zugangspunkt (ZP2), wobei der erste Messkanal einen ersten optischen Sensor (11), insbesondere eine Kamera, umfasst,
einen zweiten Messkanal (20) zum Bereitstellen eines zweiten Messsignals (M2) in Abhängigkeit einer von dem zweiten Messkanal (20) erfassten zweiten Anzahl von Passagen über den mindestens einen Zugangspunkt (ZP1) oder den weiteren Zugangspunkt (ZP2), wobei der zweite Messkanal den ersten optischen Sensor (11) oder einen zweiten optischen Sensor (21),
insbesondere einen mehrlagigen Laserscanner, umfasst, und
eine Steuereinheit (30) zum Bereitstellen eines Ergebnissignals (ES) in Abhängigkeit eines Vergleichs der ersten Anzahl mit der zweiten Anzahl, wobei das Ergebnissignal (ES) dazu geeignet ist, einen Fehlerzustand zu signalisieren, wenn die erste Anzahl ungleich der zweiten Anzahl ist,
wobei die Steuereinheit des Weiteren zum Bereitstellen der ersten oder zweiten Anzahl als Zählerstand oder weiterer Zählerstand eingerichtet ist, wenn die erste Anzahl mit der zweiten Anzahl übereinstimmt.

12. Sensorsystem nach dem vorherigen Anspruch,
wobei der zweite Messkanal (20) ein klassifizierendes neuronales Netz umfasst, welches darauf trainiert ist, von dem ersten Sensor (11) oder dem zweiten Sensor (21) ermittelte Sensordaten, welche insbesondere dreidimensionale Bilddaten umfassen, nach mindestens einem vordefinierten Merkmal auszuwerten.

13. Sensorsystem nach einem der Ansprüche 10 bis 12,
weiter aufweisend eine Kommunikationseinheit,
wobei das Sensorsystem dazu eingerichtet ist, mittels der Kommunikationseinheit mindestens ein Steuersignal an das mindestens eine autonome Fahrzeug (200) zu senden, wobei das Steuersignal ein Unterbinden oder ein Freigeben einer autonomen Bewegung des mindestens einen autonomen Fahrzeugs (200) in dem Verladebereich (400) bewirkt.

14. Sensorsystem nach einem der Ansprüche 10 bis 13,
weiter aufweisend eine Anzeige- und Bedieneinheit (500), die dazu eingerichtet ist, ein Aktivieren des Beladens und/oder Entladens durch eine Bedienperson (600) zu ermöglichen, und die insbesondere dazu eingerichtet ist, den Zählerstand der optischen Zählvorrichtung (300) und/oder den weiteren Zählerstand der weiteren optischen Zählvorrichtung (310) und/oder den Gesamtzählerstand anzuzeigen.

15. Sensorsystem nach einem der Ansprüche 10 bis 14,
weiter aufweisend mindestens einen weiteren Sensor (800), insbesondere einen Radarsensor, der dazu eingerichtet ist, eine Anwesenheit von mindestens einer Person (600) in einem Laderaum (110) des Lkws (100) und/oder im Verladebereich (400) zu detektieren.
